# EUROPEAN PATENT APPLICATION

(11) **EP 4 730 490 A1**
(43) Date of publication of application: **22.04.2026**
(21) Application number: 24928706.1
(22) Date of filing: 09.12.2024
(51) Int. Cl.: H01M 10/658, H01M 10/6556, H01M 10/613, H01M 50/244, H01M 50/249, H01M 50/271, H01M 50/342

(54) **BATTERY PACK**

(30) Priority: 04.03.2024 KR 20240030734
(71) Applicant: LG Energy Solution, Ltd., Seoul 07335 (KR)
(72) Inventor: LEE, Jung-Hoon, Daejeon 34122 (KR); KIM, Soo-Youl, Daejeon 34122 (KR); JUNG, Hye-Mi, Daejeon 34122 (KR); HAN, Min-Hee, Daejeon 34122 (KR)
(74) Representative: Plasseraud IP
(86) International application number: PCT/KR2024/020097
(87) International publication number: WO 2025/187908

(57) **Abstract**

Disclosed is a battery pack. The battery pack includes a base plate; a lower battery module positioned on an upper surface of the base plate; an inner cover including a top part that covers an upper surface of the lower battery module and has a flow path formed therein; and an upper battery module installed on an upper surface of the inner cover.

## Description

### TECHNICAL FIELD

The present disclosure relates to a battery pack.

The present application claims priority to Korean Patent Application No. 10-2024-0030734 filed on March 4, 2024 in the Republic of Korea, the disclosure of which is incorporated herein by reference.

### BACKGROUND ART

As the demand for portable electronic products such as laptops, video cameras, and portable phones is rapidly increasing, and robots, electric vehicles, or the like are commercialized in earnest, research on high-performance secondary batteries capable of repeated charging and discharging is actively underway.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. In addition, multiple battery modules may be connected to each other to form a battery pack.

However, if a plurality of secondary batteries (battery cells) or a plurality of battery modules are crowded in a small space, they may be vulnerable to thermal events. In particular, if an event such as thermal runaway occurs in one battery cell, high temperature gas, flame, or heat may be generated. If the gases, flames, heat, etc. is transferred to other battery cells included in the same battery module, an explosive chain reaction situation such as thermal propagation may occur. Also, this chain reaction not only causes accidents such as fire or explosion in the corresponding battery module, but may also cause fire or explosion in other battery modules.

Moreover, in the case of medium to large-sized battery packs such as electric vehicles, a large number of battery cells and battery modules are included to increase output and/or capacity, so the risk of thermal chain reaction may increase further. Furthermore, in the case of a battery pack mounted on an electric vehicle, etc., users such as drivers may be present nearby. Therefore, if a thermal event occurring in a specific battery cell or module is not properly controlled and a chain reaction occurs, it may cause not only great property damage but also human casualties. Therefore, it is necessary to properly control thermal events occurring in battery cells or modules to improve the thermal stability of the battery pack.

### DISCLOSURE

### Technical Problem

The present disclosure is designed to solve these and other problems.

The present disclosure is directed to providing a battery pack with improved safety when a thermal event occurs.

The present disclosure is also directed to providing a battery pack capable of suppressing heat propagation to adjacent battery modules when a thermal event occurs.

The present disclosure is also directed to providing a battery pack with improved cooling efficiency.

### Technical Solution

In one aspect of the present disclosure, there is provided a battery pack comprising: a base plate; a lower battery module positioned on an upper surface of the base plate; an inner cover including a top part that covers an upper surface of the lower battery module and has a flow path formed therein; and an upper battery module installed on an upper surface of the inner cover.

In addition, the inner cover may further include a side part that covers one side of the lower battery module and has a flow path that communicates with the top part.

In addition, the side part may be installed on the base plate.

In addition, the base plate may have a flow path formed therein.

In addition, the flow path of the base plate and the flow path of the inner cover may be communicated with each other.

In addition, the battery pack may further comprise a first fastening member configured to couple the inner cover and the upper battery module.

In addition, the battery pack may further comprise a first flame retardant member disposed between the lower battery module and the inner cover.

In addition, the battery pack may further comprise a second flame retardant member disposed between the inner cover and the upper battery module.

In addition, the battery pack may further comprise a third flame retardant member disposed inside the top part.

In addition, the battery pack may further comprise a side wall installed on the upper surface of the base plate and configured to cover the inner cover and the upper battery module.

In addition, the battery pack may further comprise a pack cover configured to cover an upper surface of the upper battery module.

In addition, the lower battery module may include a module case having a space inside and a venting hole formed in the upper surface thereof; and a plurality of battery cells arranged inside the module case.

In addition, the battery pack may further comprise a fourth flame retardant member disposed between the side part and the lower battery module.

In addition, the battery pack may further comprise a fifth flame retardant member disposed inside the side part.

In addition, the battery pack may further comprise a second fastening member configured to couple the inner cover and the base plate.

In another aspect of the present disclosure, there is also provided a vehicle, comprising the battery pack according to the present disclosure.

### Advantageous Effects

According to at least one of the embodiments of the present disclosure, it is possible to improve thermal stability of a battery pack.

According to at least one of the embodiments of the present disclosure, heat propagation may be suppressed.

According to at least one of the embodiments of the present disclosure, the cooling efficiency of a battery pack may be improved.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIG. 2 is a diagram showing the battery pack of FIG. 1, in which some components are exploded.
FIG. 3 is a diagram showing a battery module of FIG. 2.
FIG. 4 is a diagram showing the battery module of FIG. 3, in which some components are exploded.
FIG. 5 is a diagram showing the battery pack according to an embodiment of the present disclosure, in which some components are exploded.

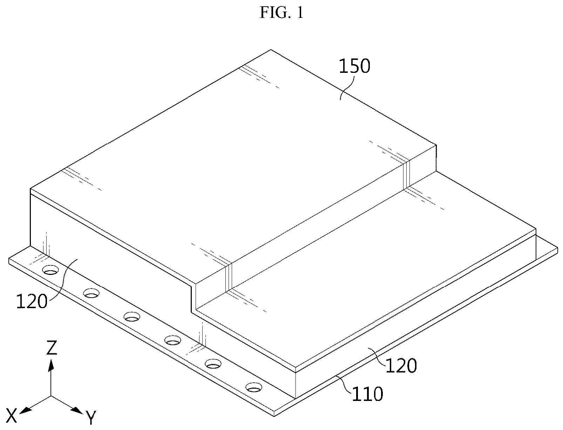

FIG. 1 is a diagram showing a battery pack according to an embodiment of the present disclosure.

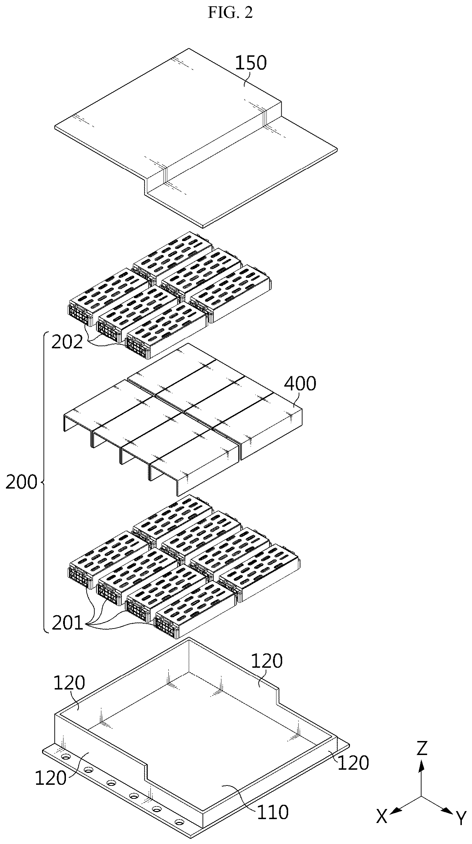

FIG. 2 is a diagram showing the battery pack of FIG. 1, in which some components are exploded.

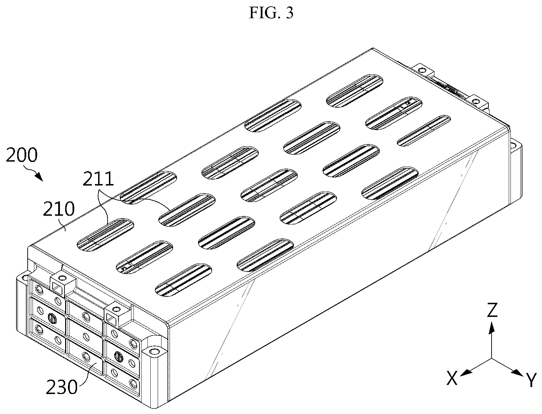

FIG. 3 is a diagram showing a battery module of FIG. 2.

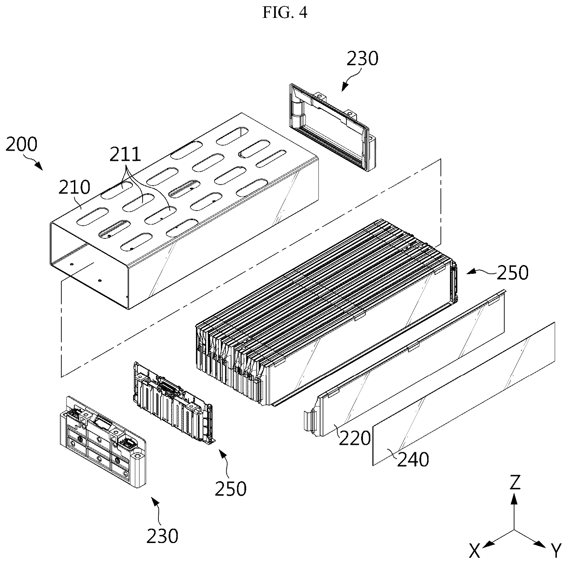

FIG. 4 is a diagram showing the battery module of FIG. 3, in which some components are exploded.

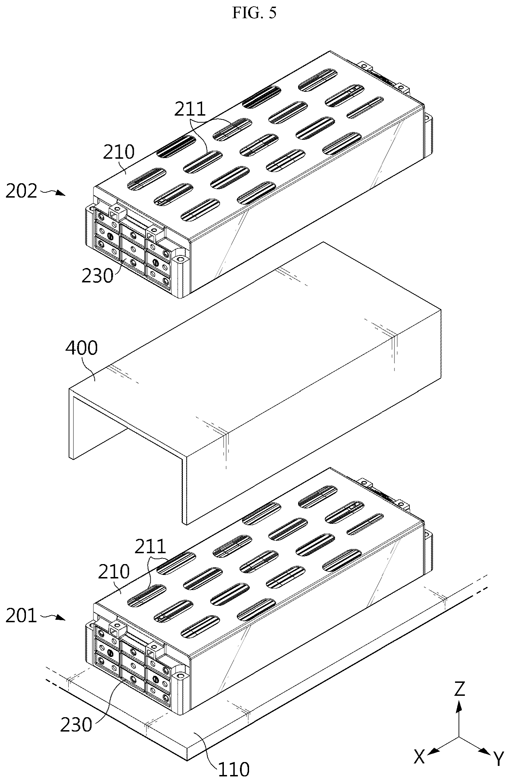

FIG. 5 is a diagram showing the battery pack according to an embodiment of the present disclosure, in which some components are exploded.

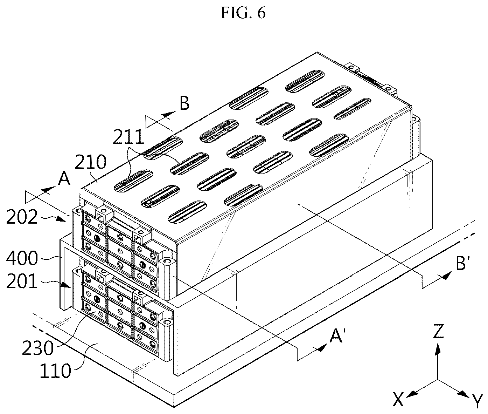

FIG. 6 is a drawing showing the combined configuration of FIG. 5.

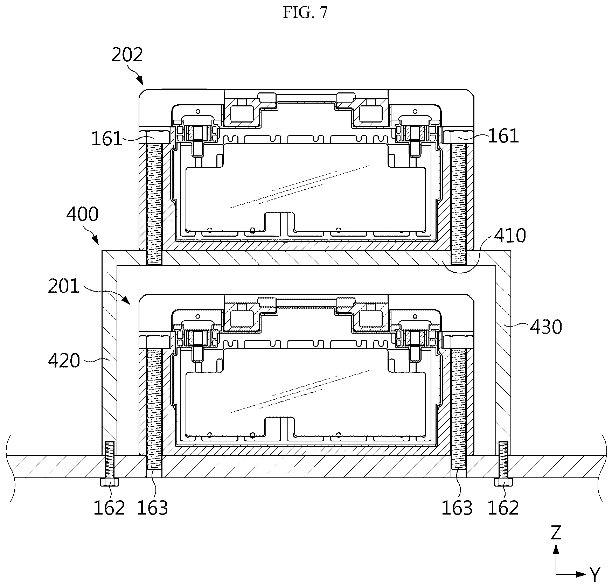

FIG. 7 is a cross-sectional view taken along the cutting line A-A' of FIG. 6.

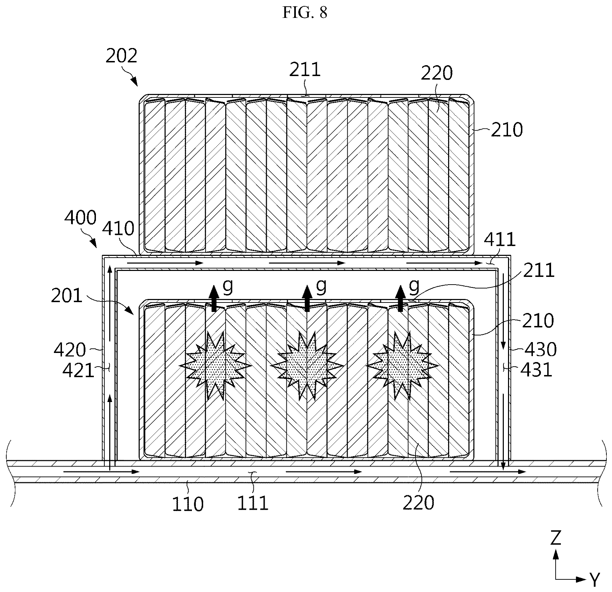

FIG. 8 is a cross-sectional view taken along the cutting line B-B' of FIG. 6.

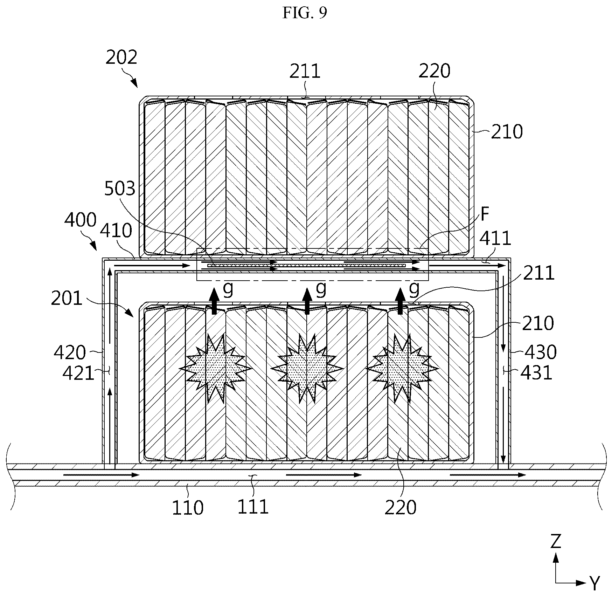

FIG. 9 is a drawing showing a modified embodiment of FIG. 8.

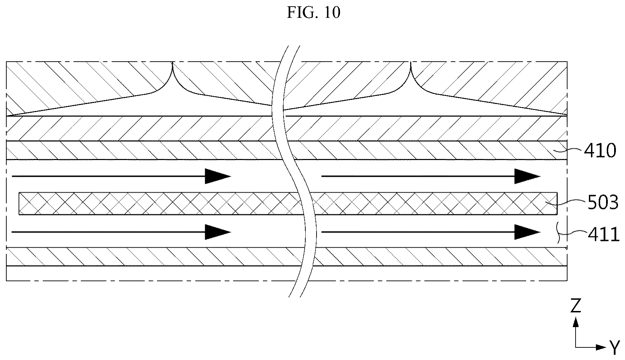

FIG. 10 is an enlarged drawing showing a part F of FIG. 9.

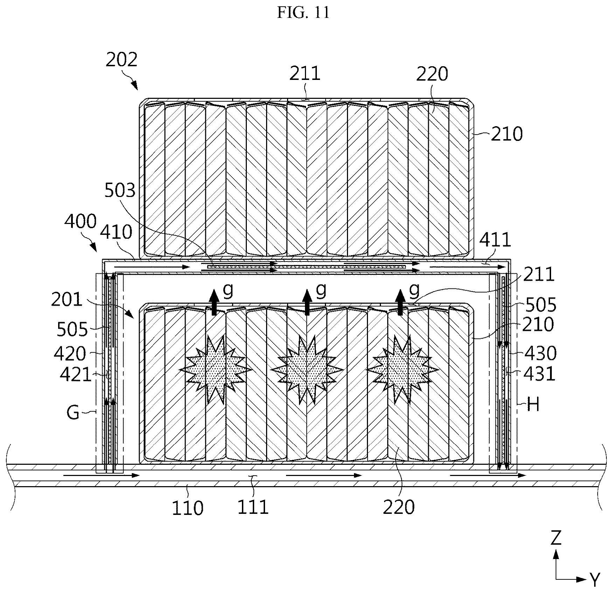

FIG. 11 is a drawing showing a modified embodiment of FIG. 9.

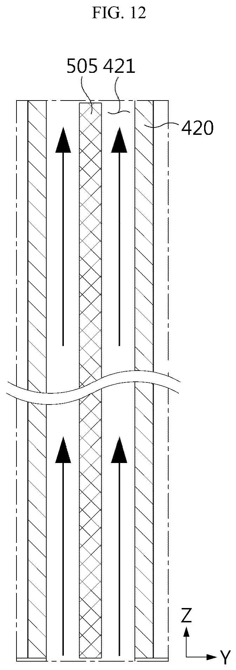

FIG. 12 is an enlarged drawing showing a part G of FIG. 11.

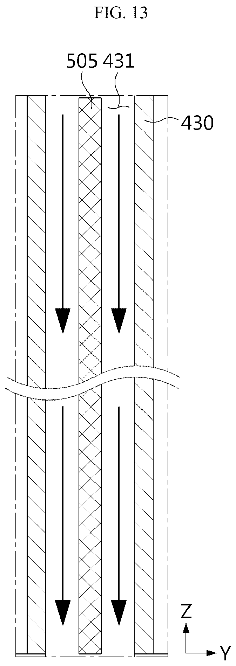

FIG. 13 is an enlarged drawing showing a part H of FIG. 11.

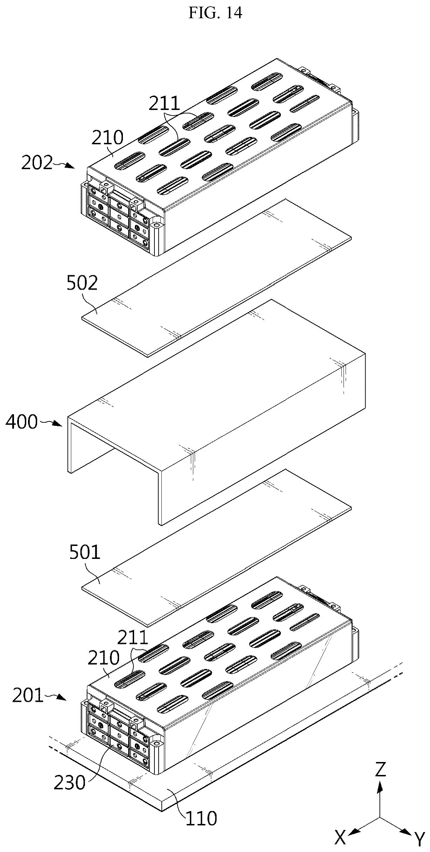

FIG. 14 is a drawing showing a battery pack according to another embodiment of the present disclosure, in which some components are exploded.

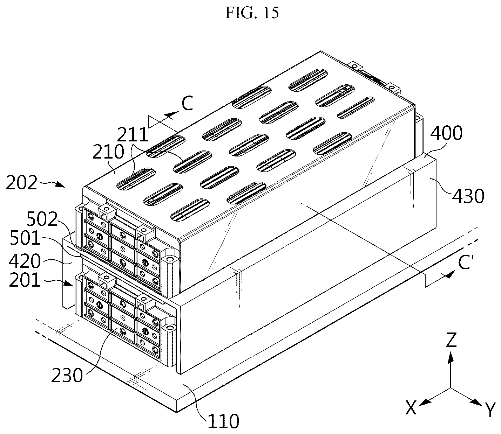

FIG. 15 is a drawing showing the combined configuration of FIG. 14.

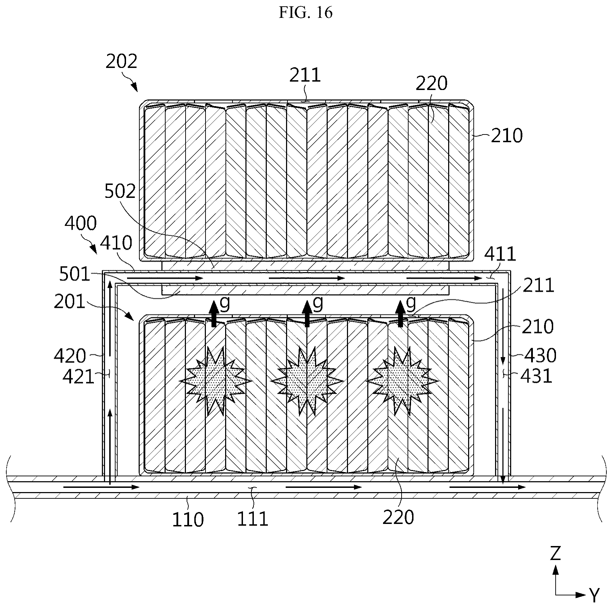

FIG. 16 is a cross-sectional view taken along the cutting line C-C' of FIG. 15.

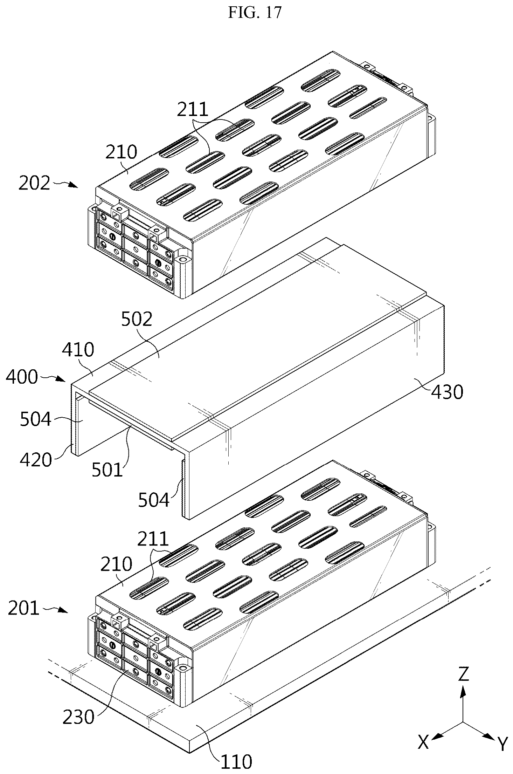

FIG. 17 is a diagram showing a battery pack according to still another embodiment of the present disclosure, in which some components are exploded.

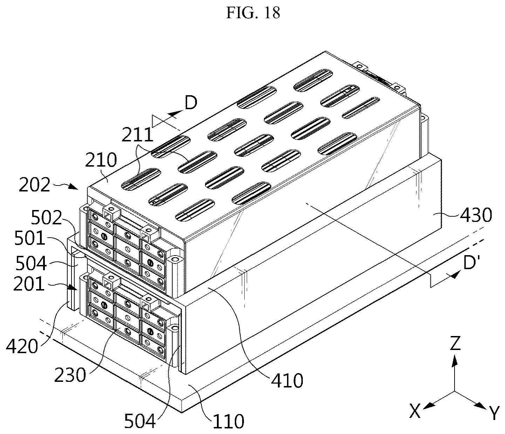

FIG. 18 is a drawing showing the combined configuration of FIG. 17.

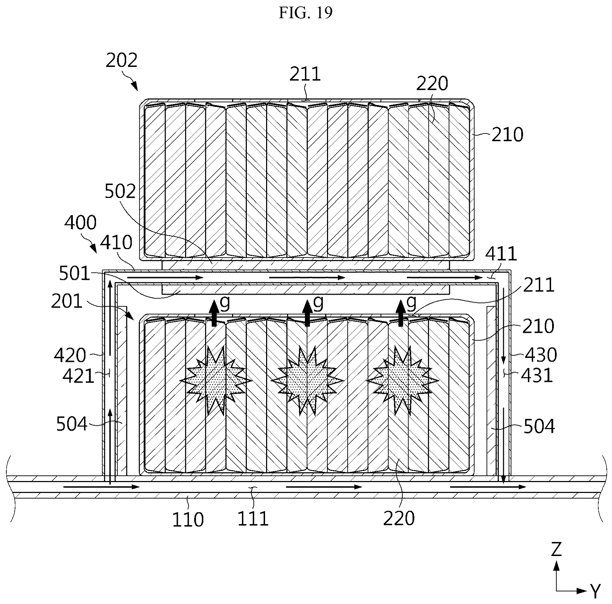

FIG. 19 is a cross-sectional view taken along the cutting line D-D' of FIG. 17.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

FIG. 1 is a diagram showing a battery pack according to an embodiment of the present disclosure. FIG. 2 is a diagram showing the battery pack of FIG. 1, in which some components are exploded.

Referring to FIGS. 1 and 2, the battery pack according to an embodiment of the present disclosure may include a base plate 110 and a battery module 200.

The base plate 110 may have a rectangular plate shape.

The battery module 200 may be installed, fixed, coupled, attached or fastened to the upper surface of the base plate 110. The battery module 200 may be stacked along the upper and lower direction or the Z-axis direction. In addition, the battery module 200 may be stacked along the right and left direction or the Y-axis direction. In addition, the battery module 200 may be stacked along the front and rear direction or the X-axis direction.

The battery module 200 may be provided in plurality. The plurality of battery modules 200 may include a lower battery module 201 and an upper battery module 202. The upper battery module 202 may be located above the lower battery module 201. The lower battery module 201 may be installed, fixed, coupled, attached, or fastened to the upper surface of the base plate 110. The structure and configuration of the lower battery module 201 and the upper battery module 202 may be identical. The lower battery module 201 and the upper battery module 202 may be collectively referred to as the battery module 200.

FIG. 3 is a diagram showing a battery module 200 of FIG. 2. FIG. 4 is a diagram showing the battery module 200 of FIG. 3, in which some components are exploded.

Referring to FIGS. 3 and 4, the battery module 200 of the battery pack according to an embodiment of the present disclosure may include a module case 210, a plurality of battery cells 220, a bus bar frame assembly 250, an end cover 230, and a compression pad 240.

The module case 210 may have a rectangular parallelepiped shape. The module case 210 may also be referred to as a frame 210. The module case 210 may provide a space inside. The module case 210 may have an upper surface, a lower surface, and a pair of side surfaces. In addition, the module case 210 may have an open shape at the front surface and the rear surface. The module case 210 may have a venting hole 211 at the upper surface. The venting hole 211 may communicate the inside and the outside of the module case 210.

The plurality of battery cells 220 may be stacked in the right and left direction or the Y-axis direction. At this time, the battery cell 220 may mean a secondary battery. The secondary battery may include an electrode assembly, an electrolyte, an electrode lead, and a battery case. In particular, the battery cell 220 may be a pouch-type secondary battery. Each battery cell 220 may extend along the front and rear direction or the X-axis direction. The electrode lead may protrude toward the front and rear of each battery cell 220.

The compression pad 240 may be disposed between the plurality of battery cells 220. The compression pad 240 may be disposed between at least some of the battery cells 220 and/or at the perimeter of the stack.

The compression pad 240 may be contain an elastic material to enable swelling absorption of the battery cell 220. For example, the compression pad 240 may be made of a foam material such as polyurethane. Alternatively, the compression pad 240 may contain a material capable of blocking heat or flame. For example, the compression pad 240 may contain an insulating or fire-retardant material such as silicone or mica.

The bus bar frame assembly 250 may be provided at the front and rear of the plurality of battery cells 220, respectively. The bus bar frame assembly 250 may be electrically connected to the electrode leads of the plurality of battery cells 220.

The pair of end covers 230 may be respectively coupled to the front and rear of the module case 210. The pair of end covers 230 may cover the front surface and the rear surface of the module case 210. The end covers 230 may have a rectangular shape.

FIG. 5 is a diagram showing the battery pack according to an embodiment of the present disclosure, in which some components are exploded. FIG. 6 is a drawing showing the combined configuration of FIG. 5. FIG. 7 is a cross-sectional view taken along the cutting line A-A' of FIG. 6. FIG. 8 is a cross-sectional view taken along the cutting line B-B' of FIG. 6.

Referring to FIGS. 1 to 8, the battery pack according to an embodiment of the present disclosure may include an inner cover 400. The inner cover 400 may cover an upper surface of the lower battery module 201. In addition, the inner cover 400 may be provided in plurality. The inner covers 400 may be provided to correspond with the lower battery module 201 in one-to-one relationship. The inner covers 400 may extend along the longitudinal direction of the battery module 200, the X-axis direction, or the front and rear direction.

The inner cover 400 may include a top part 410. The top part 410 may have a rectangular plate shape. The top part 410 may have a flow path 411 formed therein. The flow path 411 of the top part 410 may be referred to as a top flow path 411. The top part 410 may cover an upper surface of the lower battery module 201.

The upper battery module 202 may be positioned on the top part 410. Also, the upper battery module 202 may be installed, fixed, coupled, attached or fastened to the upper surface of the top part 410.

According to this configuration of the present disclosure, the thermal safety of the battery pack may be improved. The inner cover 400 may block or reduce the transfer of thermal energy to the upper battery module 202 due to the venting gas g or the like when a thermal event occurs from the lower battery module 201. In addition, the top part 410 may delay the accumulation of thermal energy by having a flow path therein. As a result, thermal runaway or thermal propagation may be suppressed or blocked.

In addition, the inner cover 400 may block or reduce the transfer of thermal energy from the upper battery module 202 to the lower battery module 201 when a thermal event occurs.

Referring to FIGS. 1 to 8, the inner cover 400 of the battery pack according to an embodiment of the present disclosure may include side parts 420 and 430. The side parts 420 and 430 may cover the side surfaces of the lower battery module 201. The side parts 420 and 430 may extend in the upper and lower direction or the Z-axis direction. In addition, the side parts 420 and 430 may be connected, fastened, coupled, or attached to the top part 410. In addition, the side parts 420 and 430 may be provided as a pair. The first side part 420 and the second side part 430 may be collectively referred to as the side parts 420 and 430 or the pair of side parts 420 and 430. The pair of side parts 420 and 430 may be arranged to face each other. The pair of side parts 420 and 430 may cover different sides of the battery module 200, respectively. The pair of side parts 420 and 430 and the top part 410 may also be formed as one piece.

In addition, the pair of side parts 420 and 430 may have flow paths 421 and 431 internally. The flow paths 421 and 431 of the pair of side parts 420 and 430 may be referred to as side flow paths 421 and 431.

According to this configuration of the present disclosure, the thermal safety of the battery pack may be improved. The inner cover 400 may block or reduce the transfer of thermal energy to adjacent lower battery modules 201 when a thermal event occurs from the lower battery module 201. In addition, the side parts 420 and 430 may delay the accumulation of thermal energy by having the side flow paths 421 and 431 therein. As a result, thermal runaway or thermal propagation may be suppressed or blocked.

Referring to FIGS. 1 to 8, the side parts 420 and 430 of the battery pack according to an embodiment of the present disclosure may be installed, fixed, coupled, attached or fastened to the upper surface of the base plate 110.

According to this configuration of the present disclosure, the thermal safety of the battery pack may be improved by stably installing the inner cover 400.

Also, according to this configuration of the present disclosure, the rigidity of the base plate 110 or the battery pack may be improved.

Referring to FIGS. 1 to 8, the battery pack according to an embodiment of the present disclosure may include a first fastening member 161. The first fastening member 161 may couple the inner cover 400 and the upper battery module 202. The first fastening member 161 may couple the top part 410 and the upper battery module 202. The first fastening member 161 may penetrate the top part 410.

According to this configuration of the present disclosure, the thermal safety of the battery pack may be improved by stably installing the inner cover 400.

Also, according to this configuration of the present disclosure, the rigidity of the base plate 110 or the battery pack may be improved.

Referring to FIGS. 1 to 8, the battery pack according to an embodiment of the present disclosure may include a second fastening member 162. The second fastening member 162 may couple the inner cover 400 and the base plate 110. The second fastening member 162 may couple the side parts 420 and 430 and the base plate 110. The second fastening member 162 may penetrate the base plate 110.

According to this configuration of the present disclosure, the thermal safety of the battery pack may be improved by stably installing the inner cover 400.

Also, according to this configuration of the present disclosure, the rigidity of the base plate 110 or the battery pack may be improved.

Referring to FIGS. 1 to 8, the battery pack according to an embodiment of the present disclosure may include a third fastening member 163. The third fastening member 163 may couple the lower battery module 201 and the base plate 110. The third fastening member 163 may penetrate the base plate 110.

Referring to FIGS. 1 to 8, the battery pack according to an embodiment of the present disclosure may have a base plate 110 having a flow path formed therein. The flow path 111 of the base plate 110 may be referred to as a base flow path 111. At this time, the base plate 110 may also be referred to as a heatsink 110. The base flow path 111 may be communicated with the flow path of the inner cover 400. The base flow path 111 may be communicated with the side flow paths 421 and 431. In addition, the base flow path 111 may be communicated with the top flow path 411.

Cooling air or cooling liquid may flow along the base flow path 111, the side flow paths 421 and 431, and the top flow path 411. For example, a part of the cooling fluid flowing along the base flow path 111 may branch off and flow into the first side flow path 421. The cooling fluid flowing into the first side flow path 421 may flow along the top flow path 411 and the second side flow path 431 and then merge into the base flow path 111.

According to this configuration of the present disclosure, the cooling efficiency of the battery pack may be improved.

In addition, according to this configuration of the present disclosure, thermal safety may be improved. The inner cover 400 may block or reduce the transfer of thermal energy to adjacent battery modules 200 by allowing the cooling fluid to flow along the base flow path 111, the side flow paths 421 and 431, and the top flow path 411 when a thermal event occurs from the lower battery module 201. As a result, thermal runaway or thermal propagation may be suppressed or blocked.

Referring to FIGS. 1 to 8, the battery pack according to an embodiment of the present disclosure may include a side wall 120. The side wall 120 may form an exterior of the battery pack. The side wall 120 may be installed, fixed, coupled, attached, or fastened to the upper surface of the base plate 110. The battery pack may include four side walls 120. The side walls 120 and the base plate 110 may form an internal space. The side wall 120 may cover at least one of the inner cover 400, the lower battery module 201, and the upper battery module 202.

Referring to FIGS. 1 to 8, the battery pack according to an embodiment of the present disclosure may include a pack cover 150. The pack cover 150 may form an exterior of the battery pack. The pack cover 150 may be installed, fixed, coupled, attached, or fastened to the side wall 120. The pack cover 150 may cover the internal space. The pack cover 150 may cover at least one of the inner cover 400, the lower battery module 201, and the upper battery module 202.

Hereinafter, the features different from the former embodiment will be explained, and the features identical to the former embodiment will not be described in detail again.

FIG. 9 is a drawing showing a modified embodiment of FIG. 8. FIG. 10 is an enlarged drawing showing a part F of FIG. 9. Referring to FIGS. 9 and 10, the top part 410 of the inner cover 400 of the battery pack according to an embodiment of the present disclosure may include a third flame retardant member 503. The third flame retardant member 503 may contain a flame retardant material. In addition, the third flame retardant member 503 may contain an insulating material. In addition, the third flame retardant member 503 may contain a heat-resistant material. In addition, the third flame retardant member 503 may contain a fire-resistant material. For example, the third flame retardant member 503 may contain aerogel, mica, silicone, or the like.

The third flame retardant member 503 may be disposed inside the top part 410. Also, the third flame retardant member 503 may be disposed in the top flow path 411. Even if the third flame retardant member 503 is disposed in the top flow path 411, the top flow path 411 may be communicated with the first side flow path 421 and the second side flow path 431. The third flame retardant member 503 may have a pad shape. Also, the third flame retardant member 503 may extend in the front and rear direction or the right and left direction along the top part 410.

According to this configuration of the present disclosure, the thermal safety of the battery pack may be improved. When a thermal event occurs from the lower battery module 201, the inner cover 400 may be damaged. The third flame retardant member 503 may block or reduce the transfer of thermal energy to adjacent upper battery modules 202 even if the inner cover 400 is damaged. As a result, thermal runaway or heat propagation may be suppressed or blocked.

FIG. 11 is a drawing showing a modified embodiment of FIG. 9. FIG. 12 is an enlarged drawing showing a part G of FIG. 11. FIG. 13 is an enlarged drawing showing a part H of FIG. 11. Referring to FIGS. 11 to 13, the side parts 420 and 430 of the inner cover 400 of the battery pack according to an embodiment of the present disclosure may include a fifth flame retardant member 505. The fifth flame retardant member 505 may be arranged inside the side parts 420 and 430. The fifth flame retardant member 505 may be provided as a pair. In addition, the fifth flame retardant member 505 may be arranged in the side flow paths 421 and 431. Even if the fifth flame retardant member 505 is arranged in the side flow paths 421 and 431, the side flow paths 421 and 431 may be communicated with the top flow path 411. The fifth flame retardant member 505 may have a pad shape. Also, the third flame retardant member 503 may extend in the front and rear direction or the upper and lower direction along the side parts 420 and 430.

According to this configuration of the present disclosure, the thermal safety of the battery pack may be improved. When a thermal event occurs from the lower battery module 201, the inner cover 400 may be damaged. The fifth flame retardant member 505 may block or reduce the transfer of thermal energy to adjacent lower battery modules 201 or the upper battery module 202 even if the inner cover 400 is damaged. As a result, thermal runaway or heat propagation may be suppressed or blocked.

FIG. 14 is a drawing showing a battery pack according to another embodiment of the present disclosure, in which some components are exploded. FIG. 15 is a drawing showing the combined configuration of FIG. 14. FIG. 16 is a cross-sectional view taken along the cutting line C-C' of FIG. 15.

Referring to FIGS. 14 to 16, the battery pack according to an embodiment of the present disclosure may include a first flame retardant member 501. The first flame retardant member 501 may be disposed between the lower battery module 201 and the inner cover 400. In addition, the first flame retardant member 501 may be disposed between the upper surface of the lower battery module 201 and the top part 410. In addition, the first flame retardant member 501 may be coupled, attached, fixed, or fastened to the lower surface of the top part 410. In addition, the first flame retardant member 501 may extend in the front and rear direction or the right and left direction along the top part 410.

According to this configuration of the present disclosure, the thermal safety of the battery pack may be improved. The first flame retardant member 501 may prevent damage to the inner cover 400 when a thermal event occurs from the lower battery module 201. In addition, the first flame retardant member 501 may block or reduce the transfer of thermal energy to adjacent upper battery modules 202 even if the inner cover 400 is damaged. As a result, thermal runaway or heat propagation may be suppressed or blocked.

Referring to FIGS. 14 to 16, the battery pack according to an embodiment of the present disclosure may include a second flame retardant member 502. The second flame retardant member 502 may be disposed between the upper battery module 202 and the inner cover 400. In addition, the second flame retardant member 502 may be disposed between the lower surface of the upper battery module 202 and the top part 410. In addition, the second flame retardant member 502 may be coupled, attached, fixed, or fastened to the upper surface of the top part 410 or the lower surface of the upper battery module 202. In addition, the second flame retardant member 502 may extend in the front and rear direction or the right and left direction along the top part 410.

According to this configuration of the present disclosure, the thermal safety of the battery pack may be improved. When a thermal event occurs from the lower battery module 201, the inner cover 400 may be damaged. The second flame retardant member 502 may block or reduce the transfer of thermal energy to adjacent upper battery modules 202 even if the inner cover 400 is damaged. As a result, thermal runaway or heat propagation may be suppressed or blocked.

FIG. 17 is a diagram showing a battery pack according to still another embodiment of the present disclosure, in which some components are exploded. FIG. 18 is a drawing showing the combined configuration of FIG. 17. FIG. 19 is a cross-sectional view taken along the cutting line D-D' of FIG. 17.

Referring to FIGS. 17 to 19, the battery pack according to an embodiment of the present disclosure may include a fourth flame retardant member 504. The fourth flame retardant member 504 may be disposed between the lower battery module 201 and the inner cover 400. Also, the fourth flame retardant member 504 may be disposed between the lower battery module 201 and side parts 420 and 430. The fourth flame retardant member 504 may be provided as a pair. Also, the fourth flame retardant member 504 may be coupled, attached, fixed, or fastened to the inner surfaces of the side parts 420 and 430. Also, the fourth flame retardant member 504 may extend in the front and rear direction or the upper and lower direction along the side parts 420 and 430. The lower battery module 201 may be positioned between a pair of fourth flame retardant members 504.

According to this configuration of the present disclosure, the thermal safety of the battery pack may be improved. The fourth flame retardant member 504 may prevent damage to the inner cover 400 when a thermal event occurs from the lower battery module 201. In addition, even if the inner cover 400 is damaged, the fourth flame retardant member 504 may block or reduce the transfer of thermal energy to adjacent lower battery modules 201 or the upper battery module 202. As a result, thermal runaway or heat propagation may be suppressed or blocked.

In addition, when the battery pack according to the present disclosure may further include various components, for example components of the battery pack known at the time of filing of this application, such as a BMS, a bus bar, a relay, a current sensor, etc.

A vehicle according to the present disclosure may include the battery pack according to the present disclosure described above. The battery pack according to the present disclosure may be applied to vehicles such as electric vehicles or hybrid vehicles. In addition, the vehicle according to the present disclosure may further include various other components included in the vehicle, for example a body, a motor, and control devices such as an ECU (electronic control unit) in addition to the battery pack.

The terms indicating directions such as upper, lower, left, right, front and rear are used for convenience of description, but it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a base plate;
a lower battery module positioned on an upper surface of the base plate;
an inner cover including a top part that covers an upper surface of the lower battery module and has a flow path formed therein; and
an upper battery module installed on an upper surface of the inner cover.

2. The battery pack according to claim 1,
wherein the inner cover further includes a side part that covers one side of the lower battery module and has a flow path that communicates with the top part.

3. The battery pack according to claim 2,
wherein the side part is installed on the base plate.

4. The battery pack according to claim 1,
wherein the base plate has a flow path formed therein.

5. The battery pack according to claim 4,
wherein the flow path of the base plate and the flow path of the inner cover are communicated with each other.

6. The battery pack according to claim 1, further comprising:
a first fastening member configured to couple the inner cover and the upper battery module.

7. The battery pack according to claim 1, further comprising:
a first flame retardant member disposed between the lower battery module and the inner cover.

8. The battery pack according to claim 1, further comprising:
a second flame retardant member disposed between the inner cover and the upper battery module.

9. The battery pack according to claim 1, further comprising:
a third flame retardant member disposed inside the top part.

10. The battery pack according to claim 1, further comprising:
a side wall installed on the upper surface of the base plate and configured to cover the inner cover and the upper battery module.

11. The battery pack according to claim 1, further comprising:
a pack cover configured to cover an upper surface of the upper battery module.

12. The battery pack according to claim 1,
wherein the lower battery module includes:
a module case having a space inside and a venting hole formed in the upper surface thereof; and
a plurality of battery cells arranged inside the module case.

13. The battery pack according to claim 2, further comprising:
a fourth flame retardant member disposed between the side part and the lower battery module.

14. The battery pack according to claim 2, further comprising:
a fifth flame retardant member disposed inside the side part.

15. The battery pack according to claim 1, further comprising:
a second fastening member configured to couple the inner cover and the base plate.

16. A vehicle comprising the battery pack according to any one of claims 1 to 15.
